# EUROPÄISCHE PATENTSCHRIFT

(11) **EP 0 965 543 B1**
(45) Veröffentlichungstag und Bekanntmachung des Hinweises auf die Patenterteilung: **06.08.2003**
(21) Anmeldenummer: 99107698.5
(22) Anmeldetag: 17.04.1999
(51) Int. Cl.: B65G 1/06, B65G 1/08, B65G 47/88, B65G 1/137, B65G 47/54

(54) **Kommissionierlager für Stückgüter**
Dispensing store for piece goods
Magasin de commission pour marchandises

(30) Priorität: 22.05.1998 DE 19823083
(43) Veröffentlichungstag der Anmeldung: 22.12.1999
(73) Patentinhaber: Dynamic Systems Engineering bv, 7005 BK Doetinchem (NL)
(72) Erfinder: Hollander R. R., 7251 KC Vorden (NL)
(74) Vertreter: Christophersen & Partner

(56) Entgegenhaltungen:
- EP-A- 0 737 631
- CH-A- 432 366
- DE-A- 2 121 622
- US-A- 3 108 677

## Beschreibung

Die Erfindung betrifft ein Kommissionierlager für Stückgüter gemäß Oberbegriff des Anspruchs 1.

Die Kommissionierlagertechnik gewinnt in allen Bereichen des Handels und insbesondere auch im Lebensmittelgroßhandel an Bedeutung. Jedoch büßt die Lagertechnik im engeren Sinne, d. h. die statische Lagerung der einzelnen Stückgüter, eher an Bedeutung ein, wohingegen die dynamischen Prozesse und in erster Linie das Umschlagen der Güter an Bedeutung gewinnen. Ziel einer modernen Lagertechnik ist es daher, die Verweildauer der einzelnen Stückgüter in dem Lager und damit die mit der Einlagerung verbundene Kapitalbildung so gering wie möglich zu halten.

Die bekannten Kommissionierlager sind als mehrstöckige Regalkonstruktionen mit nebeneinander und übereinander angeordneten Lagergassen für die Stückgüter ausgebildet. Die Böden der so gebildeten Lagergassen sind mit Rollenbahnen aus frei drehbaren Rollen versehen und leicht geneigt, so daß die an dem einen Ende der Lagergassen, der sogenannten Beschickungs- oder Bestückungsseite, eingelagerten Waren unter ihrer eigenen Schwerkraft entlang den Rollenbahnen zum anderen Ende der Lagergasse, der Entnahme- bzw. Kommissionierseite, laufen. Die Einlagerung der Stückgüter auf der Beschickungsseite erfolgt in der Regel von Hand, indem die einzelnen Stückgüter von Hand von einer Palette entnommen und in die jeweils zugewiesene Lagergasse eingesetzt werden. Auch das Kommissionieren an der Entnahmeseite des Kommissionierregals erfolgt oftmals noch von Hand; kann aber auch über gesteuerte Entnahmeeinrichtungen erfolgen, siehe z.B CH 432366A.

Bekannt sind jedoch auch rechnergesteuert verfahrbare Entnahmevorrichtungen in Gestalt von Fördergeräten, die in einem auf der Kommissionierseite des Regals angeordneten Gang verfahrbar sind und entsprechend dem Kommissionierauftrag die in den einzelnen Lagergassen vorrätig gehaltenen Stückgüter übernehmen und zu einem Auftrag zusammenstellen. Die hierbei verwendeten Fördereinrichtungen sind über entsprechende Führungen in zwei Koordinaten verfahrbar, so daß von der Fördereinrichtung jede der übereinander und nebeneinander angeordneten Lagergassen einzeln angefahren werden kann.

Der Erfindung liegt die **Aufgabe** zugrunde, ein Kommissionierlager zu schaffen, mit dem sich hohe Umschlagraten erzielen lassen.

Zur **Lösung** wird bei einem Kommissionierlager der eingangs genannten Art vorgeschlagen, daß jede Lagergasse mit einer eigenen, unabhängig von den übrigen Entnahmevorrichtungen betätigbaren Entnahmevorrichtung versehen ist; siehe den Kennzeichen des Anspruch 1.

Mit einem so ausgebildeten Kommissionierlager läßt sich eine höhere Umschlagrate erzielen als dies bei bekannten Systemen der Fall ist, da jede einzelne Lagergasse mit einer eigenen Entnahmevorrichtung versehen ist, die unabhängig von den übrigen Entnahmevorrichtungen des Kommissionierlagers rechnergesteuert betätigbar ist. Das erfindungsgemäße Kommissionierlager ermöglicht auf diese Weise eine Umschlaggeschwindigkeit, bei der bei voller Ausnutzung es letztlich sogar möglich wäre, Waren aus sämtlichen Lagergassen gleichzeitig zu entnehmen und zu einem Kommissionsauftrag zusammenzustellen.

Zum Abtransport der mittels der Entnahmevorrichtungen aus den jeweiligen Lagergassen entnommenen Waren wird gemäß einer bevorzugten Ausführungsform des Kommissionierlagers vorgeschlagen, daß sich entlang den Entnahmevorrichtungen und quer zu den Lagergassen eine kontinuierlich angetriebene Transportbahn für die entnommenen Waren erstreckt.

Die einzelnen Lagergassen können in an sich bekannter Weise mit geneigten, zu dem Kommissionierbereich hin abfallenden Rollenbahnen aus antriebslosen, frei drehbaren Rollen oder Walzen versehen sein. Die Rollen bzw. Walzen können einzeln oder gruppenweise abbremsbar sein.

Gemäß einer bevorzugten Ausführungsform setzt sich jede Entnahmevorrichtung aus einem Horizontalförderer und einem eigenen Hubmechanismus zum zumindest teilweisen Anheben des Horizontalförderers zusammen. Der Hubmechanismus bringt im Falle seiner Betätigung den Horizontalförderer in Kontakt mit dem jeweiligen Stückgut, woraufhin dieses dann von dem Horizontalförderer ergriffen und in Richtung auf die nachgeordnete Transporteinrichtung bewegt wird.

Die Zahl der Antriebselemente und der beweglichen Einzelteile läßt sich reduzieren, indem gemäß einer bevorzugten Weiterbildung der Antrieb einer Mehrzahl der Horizontalförderer über eine gemeinsame Antriebswelle erfolgt, die sich quer zu den Lagergassen erstreckt.

Desweiteren wird bei einer Ausgestaltung des Kommissionierlagers mit einer aus Rollenbahnen bestehenden Lagergasse vorgeschlagen, daß der Horizontalförderer, mittels des Hubmechanismus bis in eine Höhe anhebbar ist, in der sich die wirksame Förderfläche des Horizontalförderers oberhalb der Aufstandsfläche der Waren auf der Rollenbahn befindet. Auf diese Weise wird vermieden, daß die an vorderster Stelle befindliche Ware in eine undefinierte Stellung im Bereich zwischen der Lagergasse und der Entnahmevorrichtung, d. h. dem Horizontalförderer gelangt.

Zur Erzielung eines sicheren Ergreifens des Stückgutes wird weiterhin vorgeschlagen, daß jede Lagergasse an ihrem dem Kommissionierbereich zugewandten Ende mit einem über die Aufstandsfläche für die Waren hinausragenden Begrenzungsanschlag versehen ist, an der die jeweils vorderste Ware anliegt, und daß der Horizontalförderer der Entnahmevorrichtung mittels des Hubmechanismus bis in eine Höhe anhebbar ist, in der sich die wirksame Förderfläche des Horizontalförderers oberhalb des Begrenzungsanschlags befindet.

Um zu verhindern, daß während der Entnahme der vordersten Ware auch die dahinter angeordnete Ware von der Förderbewegung des Horizontalförderers erfaßt wird, ist gemäß einer weiteren Ausgestaltung die Entnahmevorrichtung mit einem der Lagergasse zugewandten und durch Betätigung des Hubmechanismus anhebbaren Anschlag zum vorläufigen Zurückhalten der zweitvordersten Ware versehen. Zur Erzielung einer baulichen Vereinfachung ist es hierbei von Vorteil, wenn der Anschlag zusammen mit dem Horizontalförderer anhebbar gestaltet ist.

Zwecks konstruktiv einfacher Realisierung des Hubmechanismus wird ferner vorgeschlagen, daß zum teilweisen Anheben des Horizontalförderers dessen hinteres, in die Lagergasse reichendes Ende um die zugleich eine Drehachse bildende Antriebswelle verschwenkbar ist.

Zur Vermeidung einer eigenen Kraftquelle für das Anheben des Horizontalförderers einschließlich der sich darauf abstützenden Ware wird desweiteren ein Weg vorgeschlagen, die hierzu erforderliche Kraft unmittelbar von der ohnehin vorhandenen Drehbewegung der gemeinsamen Antriebswelle abzuleiten. Hierzu ist eine bevorzugte Ausgestaltung gekennzeichnet durch eine Magnetkupplung zum Ableiten der Bewegung beim zumindest teilweisen Anheben des Horizontalförderers aus der Drehbewegung der gemeinsamen Antriebswelle, wobei die Magnetkupplung jeder Entnahmevorrichtung getrennt von den übrigen Magnetkupplungen ansteuerbar ist. Der Vorteil dieser Ausgestaltung besteht darin, daß zur Betätigung des Hubmechanismus nur der relativ geringe Strom für die elektrische Magnetkupplung aufgebracht werden muß. Die erforderliche Anhebekraft hingegen wird unter Nutzung der Kupplung von dem Antriebsmoment der gemeinsamen Antriebswelle abgeleitet.

Vorzugsweise umschließt die Magnetkupplung die Antriebswelle ringförmig, und sie stützt sich über einen Gelenkhebel von unten gegen das Gehäuse des Horizontalförderers ab.

Mit der Erfindung wird ferner eine in dem Bestückungsbereich quer zu den Lagergassen sich erstreckende, kontinuierlich angetriebene und sich aus einzelnen Transportwalzen zusammensetzende Transportbahn für neu einzulagernde Waren vorgeschlagen.

Diese Transportbahn ist mehreren Lagergassen zugleich zugewiesen. Um die auf der Transportbahn bewegten Stückgüter in die jeweils richtige Lagergasse zu fördern, ist eine weitere Ausgestaltung durch zwischen den Transportwalzen angeordnete, für jede Lagergasse getrennt betätigbare Querförderer mit Förderrichtung in Richtung zu der jeweiligen Lagergasse gekennzeichnet.

Gemäß einer weiteren Ausgestaltung ist jeder Querförderer mit einem eigenen Hubmechanismus zum zumindest teilweisen Anheben des Querförderers versehen, wobei sich die wirksame Förderfläche des Querförderers bei unbetätigtem Hubmechanismus unterhalb und bei betätigtem Hubmechanismus zumindest teilweise oberhalb der Oberseite der Transportwalzen befindet.

Um zum Anheben des Querförderers einschließlich der gegebenenfalls erheblichen Gewichtskraft des darüber befindlichen Stückgutes einen eigenen Antrieb zu benötigen, kann die Hubkraft auch von der Antriebsenergie für die Querförderer abgeleitet werden. Hierzu wird vorgeschlagen, daß der Antrieb einer Mehrzahl der Querförderer über eine gemeinsame Antriebswelle erfolgt, und daß jeder Querförderer über eine eigene Magnetkupplung zum Ableiten der Bewegung beim zumindest teilweisen Anheben des Querförderers aus der Drehbewegung der gemeinsamen Antriebswelle verfügt, wobei die Magnetkupplung jedes Querförderers getrennt von den übrigen Magnetkupplungen ansteuerbar ist.

Schließlich wird vorgeschlagen, daß sich die Transportbahn aus Transportwalzen zusammensetzt, deren wirksame Breite mindestens das Doppelte der Breite der Rollen bzw. Walzen der Rollenbahn beträgt, und daß die Längsachsen der Transportwalzen unter einem Winkel schräg zur Richtung der Lagergassen mit Förderkomponente weg von den Lagergassen angeordnet sind.

Nachfolgend wird ein erfindungsgemäßes Kommissionierlager anhand von Ausführungsbeispielen und unter Bezugnahme auf die Zeichnungen erläutert. Auf den Zeichnungen zeigen:
- Fig. 1: in perspektivischer Darstellung einen Teil eines Kommissionierlagers in einer ersten Ausführungsform;
- Fig. 2: in perspektivischer Darstellung einen Teil eines Kommissionierlagers in einer zweiten Ausführungsform;
- Fig. 3a: einen Teilschnitt durch das Kommissionierlager in jenem Bereich, in dem die einzelnen Waren mittels einer Entnahmevorrichtung aus Lagergassen des Lagerbereichs entnommen werden, wobei die Entnahmevorrichtung in ihrer unbetätigten Stellung gezeigt ist;
- Fig. 3b: entspricht der Darstellung nach Fig. 3a, jedoch bei betätigter Entnahmevorrichtung;
- Fig. 3c: entspricht der Fig. 3b, jedoch bei im Vergleich zu Fig. 3b zeitlich fortgeschrittener Funktion und
- Fig. 3d: entspricht der Darstellung nach Fig. 3c, jedoch bei wiederum zeitlich fortgeschrittener Funktion;
- Fig. 4a: einen gegenüber Fig. 3a konstruktiv abgewandelten Teilschnitt durch das Kommissionierlager in jenem Bereich, in dem die einzelnen Waren mittels einer Entnahmevorrichtung aus Lagergassen des Lagerbereichs entnommen werden, wobei die Entnahmevorrichtung in ihrer unbetätigten Stellung gezeigt ist;
- Fig. 4b: entspricht der Darstellung nach Fig. 4a, jedoch bei betätigter Entnahmevorrichtung;
- Fig. 4c: entspricht der Fig. 4b, jedoch bei im Vergleich zu Fig. 4b zeitlich fortgeschrittener Funktion;
- Fig. 5: eine teilweise Draufsicht auf das Kommissionierlager nach Fig. 2 im Bereich der Entnahmevorrichtungen;
- Fig. 6: eine vergrößerte Darstellung des Details VI in Fig. 5;
- Fig. 7: eine Draufsicht auf einen Teil des Kommissionierlagers nach Fig. 2 im Bestückungsbereich;
- Fig. 8a: einen Teilschnitt durch das Kommissionierlager im Bestückungsbereich, wobei ein dort angeordneter Querförderer in unbetätigter Stellung gezeigt ist;
- Fig. 8b: entspricht der Darstellung nach Fig. 8a, jedoch bei betätigtem Querförderer und
- Fig. 8c: entspricht der Fig. 8b, jedoch bei im Vergleich zu Fig. 8b zeitlich fortgeschrittener Funktion.

Das Kommissionierlager für Stückgüter und insbesondere für Lebensmittel in Kartongebinden, die im Großhandel eine sehr hohe Umschlagrate haben, setzt sich in erster Linie aus einem Lagerbereich 1, einem dem Lagerbereich 1 vorgeschalteten Bestückungsbereich 2 und einem dem Lagerbereich 1 nachgeschalteten Kommissionierbereich 3 zusammen. In dem Bestückungsbereich 2 erfolgt die Einlagerung neu einzulagernder Stückgüter in den richtigen Lagerort innerhalb des Lagerbereiches 1. In dem Kommissionierbereich 3 werden die einzelnen Stückgüter entsprechend der Kommission rechnergesteuert aus dem Lagerbereich 1 entnommen und an einen Ort gefördert, an dem dann die Zusammenstellung und gegebenenfalls Verpackung der Kommissionen zu größeren Verpackungsgebinden erfolgt. Zur Entnahme der einzelnen Waren aus dem Lagerbereich 1 sind Entnahmevorrichtungen 4 vorgesehen, die die aus dem Lagerbereich 1 einzeln entnommenen Waren auf eine Transportbahn 5 ablegen, entlang der dann der Weitertransport der Waren erfolgt.

Auch die Zuförderung der Waren im Bestückungsbereich 2 erfolgt mittels einer kontinuierlich angetriebenen Transportbahn 6, die sich, ebenso wie die Transportbahn 5 in dem Kommissionierbereich 3, aus einer Vielzahl angetriebener Transportwalzen 6a zusammensetzt, auf denen die transportierten Stückgüter entlangrollen.

Der Lagerbereich 1 setzt sich aus einer Mehrzahl in einheitlicher Höhe angeordneter und parallel zueinander ausgerichteter Lagergassen 7 zusammen. Die Lagergassen 7 sind leicht geneigt und zu dem Kommissionierbereich 3 hin abfallend angeordnet und bestehen aus Rollenbahnen 8 aus frei drehbaren Rollen oder Walzen. Infolge der leichten Neigung der Lagergassen 7 können die darin befindlichen Waren unter Wirkung ihres eigenen Gewichts entlang der jeweiligen Lagergasse 7 entlangrollen, bis sie auf ein Hindernis stoßen. Die einzelnen Lagergassen 7 sind durch Begrenzungen 9 voneinander getrennt, so daß Waren nicht versehentlich in benachbarte Lagergassen gelangen können. Jede Lagergasse ist mit Bremseinrichtungen versehen, mit denen sich die Rollen oder Walzen einzeln oder gruppenweise abbremsen lassen, damit die entlang der Lagergassen entlangrollenden Waren keine zu große Geschwindigkeit erreichen. Zur seitlichen Führung der Waren können die Rollen bzw. Walzen mit Spurkränzen versehen sein.

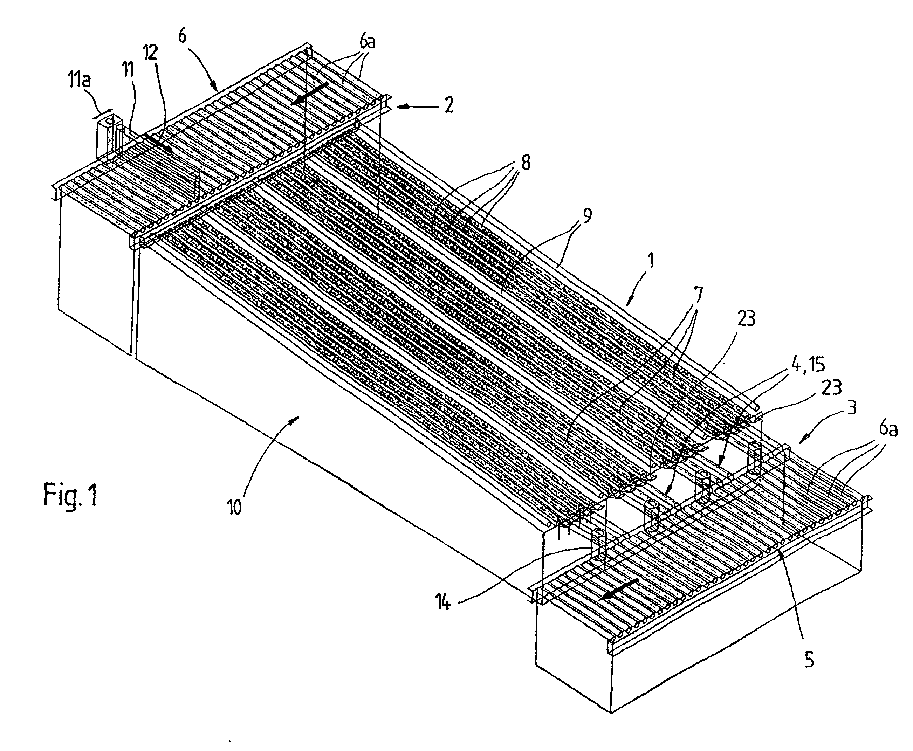

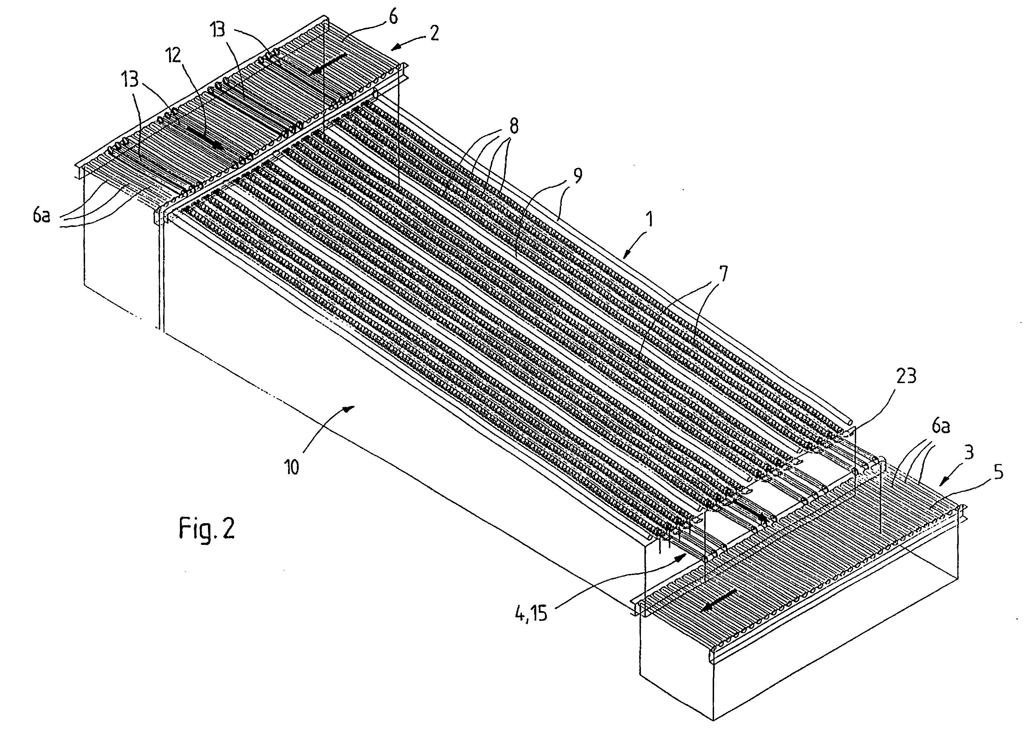

Bei dem beschriebenen Kommissionierlager befinden sich in jeder Lagergasse 7 ausschließlich Waren bzw. Stückgüter derselben Art. Bei dem in den Fign. 1 und 2 dargestellten, aus insgesamt vier Lagergassen bestehenden Lagerbereich 1 ist daher eine Lagerung von vier unterschiedlichen Warenarten möglich. Die Waren derselben Warenart sind hintereinanderliegend in der jeweiligen Lagergasse 7 angeordnet, wobei sie sich infolge der Neigung der Rollenbahn 8 selbsttätig bis an das dem Kommissionierbereich 3 zugewandte Ende der Lagergasse 7 bewegen, und die vorderste Ware dort an einem Begrenzungsanschlag 23 festgehalten wird.

Die in den Fign. 1 und 2 dargestellten insgesamt vier Lagergassen 7 bilden gemeinsam ein Modul 10. Mehrere solcher Module können nebeneinander angeordnet werden, so daß sich, abhängig von den räumlichen Gegebenheiten, bis zu einhundert Lagergassen nebeneinander und mit gemeinsamen Einrichtungen des Bestückungsbereiches 2 und des Kommissionierbereiches 3 anordnen lassen. Zusätzlich kann das dargestellte Kommissionierlager auch mehrfach übereinander angeordnet sein, um so eine Vervielfachung der Platzausnutzung zu erreichen.

Die Transportbahn 6 ist allen Lagergassen 7 gemeinsam, weshalb über die Transportbahn 6 auch Waren sehr unterschiedlicher Art herangefördert werden. Um diese Waren in die jeweils richtige Lagergasse 7 einzuordnen, ist bei dem in Fig. 1 dargestellten Ausführungsbeispiel über der Transportbahn 6 ein Querförderer 11 mit Förderrichtung 12 in Richtung auf die Lagergassen 7 angeordnet. Der Querförderer 11 ist gemäß dem Pfeil 11a entlang der Transportbahn 6 einstellbar, um so eine Position vor der jeweils zu bestückenden Lagergasse 7 einzunehmen. In Fig. 1 ist der Querförderer 11 so bezüglich der Transportbahn 6 angeordnet, daß über die Transportbahn 6 ankommende Waren in die dritte Lagergasse von rechts gelangen. Bei dem Querförderer 11 handelt es sich vorzugsweise um einen Bandförderer mit hohem Reibbeiwert, so daß Waren auch quer zu der Transportrichtung der Transportbahn 6 auf deren Transportwalzen 6a verschoben werden können. Die Einstellung des Querförderers 11 in bezug auf die Länge der Transportbahn 6 erfolgt vollautomatisch in Abhängigkeit von der jeweils über die Transportbahn 6 zugeführten Warengruppe. Deren Identifizierung kann z. B. anhand eines Barcodes erfolgen, der sich auf den Stückgütern befindet.

Gemäß der Ausführungsform nach Fig. 2 kann aber auch jeder Lagergasse 7 ein eigener, bis zwischen die Transportwalzen 6a der Transportbahn 6 reichender Querförderer 13 zugeordnet sein. Dieser kann ähnlich aufgebaut sein wie die Entnahmevorrichtung 4.

Femer kann, was die Fign. 1 und 2 nicht erkennen lassen, auf der anderen, den Lagergassen 7 abgewandten Seite der Transportbahn 6 ein zweiter Kommissionierbereich angeordnet sein, so daß sich über die Transportbahn 6 beidseitig Kommissionierbereiche beschicken lassen. Selbstverständlich sollten in diesem Fall auch die Querförderer 11, 13 in beiden Richtungen transportieren können.

In dem Kommissionierbereich 3 werden die Waren mittels der Entnahmevorrichtungen 4 einzeln aus den Lagergassen entnommen und auf die gemeinsame Transportbahn 5 überführt, die sich quer zu den Lagergassen 7 erstreckt. Pollerförrnige Rollen 14 mit horizontaler Drehachse bewirken ein verkantungsfreies Überführen und Umlenken der Waren von der Entnahmevorrichtung 4 auf die Transportbahn 5. Jeder einzelnen Lagergasse 7 ist eine eigene Entnahmevorrichtung 4 zugeordnet, weshalb Waren zugleich aus mehreren Lagergassen 7 entnommen und auf die Transportbahn 5 überführt werden können.

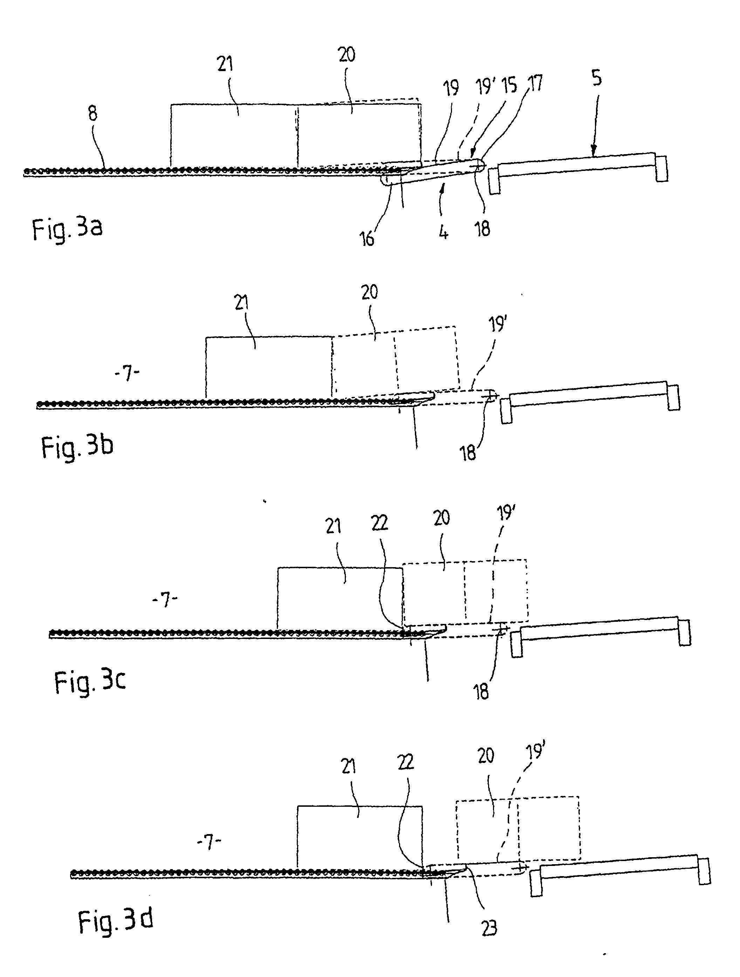

Einzelheiten und Funktionsweise der Entnahmevorrichtungen 4 werden nachfolgend anhand der Figuren 3a bis 3d erläutert.

Jede Entnahmevorrichtung 4 setzt sich aus einem Horizontalförderer 15 und einem Hubmechanismus zusammen. Der Horizontalförderer 15 befindet sich in Verlängerung und Fluchtung zu der Lagergasse 7. Der Horizontalförderer 15 besteht aus mehreren über Umlenkrollen geführten, endlosen Riemen und reicht mit seinem in Förderrichtung betrachtet hinteren Ende 16 bis in die jeweilige Lagergasse 7 hinein. Um diese Überschneidung der beiden Transportsysteme zu ermöglichen, können sich zwischen den Rollen der Rollenbahn 8 Freiräume befinden, in die die Transportriemen des Horizontalförderers 15 hineinpassen.

Das in Förderrichtung betrachtet vordere Ende 17 des Horizontalförderers 15 reicht bis nahe an die Transportbahn 5, so daß an diesem Ort eine verzögerungsfreie und schonende Übergabe der Waren auf die Transportbahn 5 erreicht wird, zusätzlich unterstützt durch die in Fig. 1 dargestellten pollerförmigen Rollen 14.

Der in den Fign. 3a bis 3d nicht im einzelnen dargestellte Hubmechanismus der Entnahmevorrichtung 4 dient dazu, den Horizontalförderer 15, zumindest aber dessen wirksame Förderfläche, anzuheben. Hierzu ist der Horizontalförderer 15 um eine nahe seinem vorderen Ende 17 angeordnete Achse 18 schwenkbar, wodurch sich das hintere Ende 16 des Horizontalförderers 15 anheben läßt. Durch Betätigung des Hubmechanismus gelangt daher die wirksame Förderfläche des Horizontalförderers 15 aus der in Fig. 3a dargestellten passiven Stellung 19 in die demgegenüber angehobene, aktive Stellung 19'. Nur in der aktiven Stellung 19' greift die Förderfläche des Horizontalförderers 15 von unten unter die in der Lagergasse 7 vorderste Ware 20, so daß diese von dem Horizontalförderer 15 ergriffen und in der in den Figuren 2b bis 2d in verschiedenen Schritten dargestellten Weise auf die Transportbahn 5 übergeben wird.

Für den Antrieb des Horizontalförderers bestehen zwei Ausführungsmöglichkeiten. Bei der ersten Ausführungsmöglichkeit wird der Horizontalförderer 15 nur dann angetrieben, wenn er sich in der in den Figuren 3a bis 3d jeweils gestrichelt dargestellten, aktiven Stellung 19' befindet. Befindet sich der Horizontalförderer 15 hingegen in der passiven Stellung 19, steht er still.

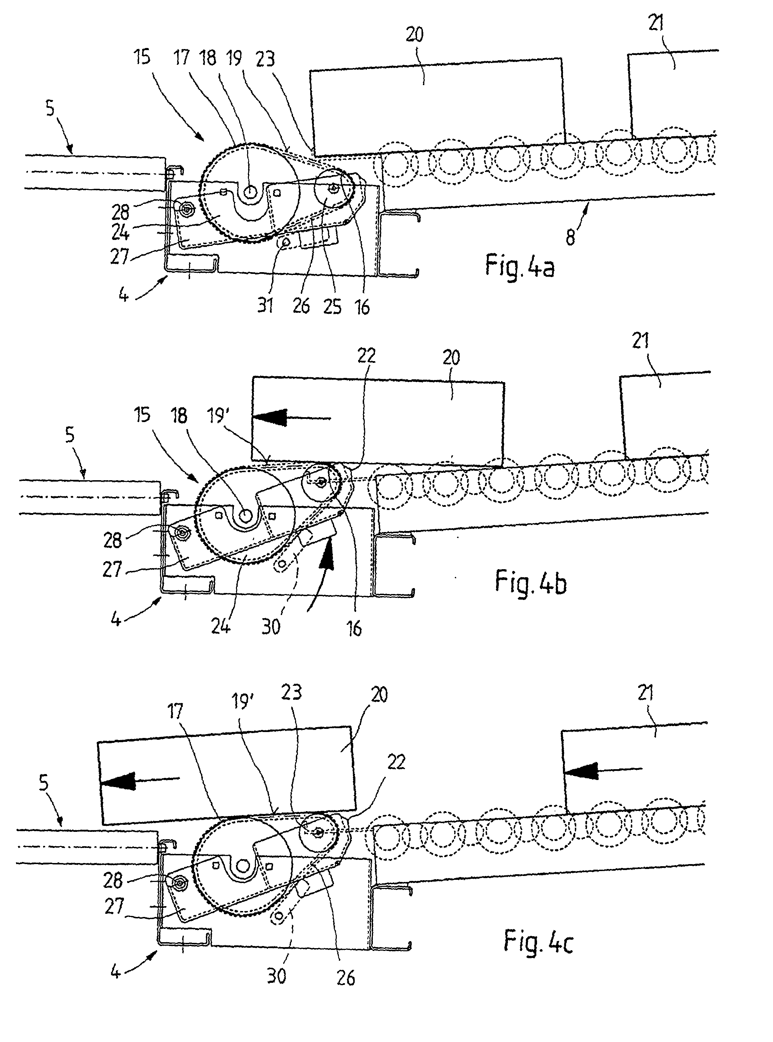

Bevorzugt wird demgegenüber jedoch eine nachfolgend anhand der Fign. 4a bis 4c, 5 und 6 beschriebene zweite Ausführungsmöglichkeit. Hierbei arbeitet der Horizontalförderer 15 im Dauerbetrieb, d. h. er läuft selbst dann, wenn er sich bei nicht betätigtem Hubmechanismus in seiner abgesenkten, passiven Stellung 19 befindet. Der Horizontalförderer 15 läuft in diesem Fall "leer", und ergreift die vorderste Ware 20 erst infolge seines Anhebens und In-Kontaktbringens mit der Unterseite der Ware 20. Der Vorteil dieser Ausführungsmöglichkeit besteht darin, daß der Antrieb mehrerer Horizontalförderer 15 über eine gemeinsame Antriebswelle erfolgen kann. Diese gemeinsame Antriebswelle ist zugleich die Achse 18, um die herum die einzelnen Horizontalförderer 15 von der passiven Stellung 19 in die aktive Stellung 19' schwenkbar sind. Bei dieser Variante erfolgt daher die Ansteuerung der einzelnen Entnahmevorrichtungen 4 ausschließlich durch Betätigung des Hubmechanismus, während die eigentliche Förderbewegung ununterbrochen läuft. Jedesmal, wenn durch Ansteuerung des Hubmechanismus der Horizontalförderer 15 aus seiner passiven in die aktive Stellung gelangt, wird eine einzelne Ware 20 aus der jeweiligen Lagergasse 7 entnommen.

Um zu verhindern, daß zusammen mit der vordersten Ware 20 auch die zweitvorderste Ware 21 von dem Horizontalförderer 15 ergriffen wird, ist im Bereich des hinteren, anhebbaren Endes 16 des Horizontalförderers 15 ein Anschlag 22 befestigt, gegen den die zweitvorderste Ware 21 gelangt. Diese Ware 21 kann daher auf der Rollenbahn 8 solange nicht weiterrollen, wie sich der Horizontalförderer 15 in seiner aktiven Stellung 19' befindet.

Sobald sich nach Übergabe der vordersten Ware 20 der Horizontalförderer 15 wieder in seine passive Stellung 19 absenkt, gibt der Anschlag 22 die nachfolgende Ware 21 frei, so daß diese bis an den vorderen Begrenzungsanschlag 23 der Lagergasse 7 vorrollen kann und damit die neue vorderste Ware ist.

Der Begrenzungsanschlag 23 ragt über die Aufstandsfläche der Lagergasse 7 hinaus, weshalb der Horizontalförderer 15 mittels des Hubmechanismus soweit anhebbar ist, daß sich die Förderfläche des Horizontalförderers 15 oberhalb dieses Begrenzungsanschlages 23 befindet.

Während die voranstehend erläuterten Fign. 3a bis 3d den Aufbau der Entnahmevorrichtungen eher schematisch zeigen, werden nachfolgend anhand der Fign. 4a bis 4c, 5 und 6 auch konstruktive Einzelheiten der Entnahmevorrichtungen erläutert:

Der Horizontalförderer 15 der Entnahmevorrichtung 4 besteht aus einer ersten Riemenscheibe 24, deren Achse mit der Antriebswelle 18 zusammenfällt und mit dieser drehfest verbunden ist, sowie einer zweiten, mehr der Rollenbahn 8 zugewandten Riemenscheibe 25. Über beiden Riemenscheiben 24, 25 führt ein endloser Riemen 26 mit griffiger Oberfläche. Die Riemenscheibe 25 ist in einem Gehäuse 27 gelagert, welches um eine Drehachse 28 nahe der Transportbahn 5 verschwenkbar ist. Zum teilweisen Anheben des Horizontalförderers 15 aus der in Fig. 4a dargestellten passiven Stellung in die in Fig. 4b und 4c dargestellte aktive Stellung ist dessen hinteres, an das Ende der Rollenbahn 8 reichendes Ende 16 um die Drehachse 28 verschwenkbar. Hierbei gelangt die mit dem Gehäuse 27 verschwenkbare hintere Riemenscheibe 25 von ihrer tieferen in ihre höhere Position, wodurch die bis dahin an dem Begrenzungsanschlag 23 anliegende Ware 20 von unten ergriffen und in Richtung auf die Transportbahn 5 transportiert wird. Dieser Transport ist in den Fign. 4b und 4c dargestellt. Zu erkennen ist ferner der an dem Gehäuse 27 der Entnahmevorrichtung ausgebildete Anschlag 22, welcher verhindert, daß zusammen mit der vordersten Ware 20 auch die zweitvorderste Ware 21 von dem Horizontalförderer 15 ergriffen wird. Der Anschlag 22 ragt gemäß Fig. 4c über die Förderebene der Rollentransportbahn, so daß die nachfolgende Ware 21 zunächst nur bis zu dem Anschlag 22 gelangt. Jetzt, nach dem erneuten Absenken der Entnahmevorrichtung in die in Fig. 4a dargestellte passive Stellung kann auch diese Ware bis zu dem starren Begrenzungsanschlag 23 nachrollen.

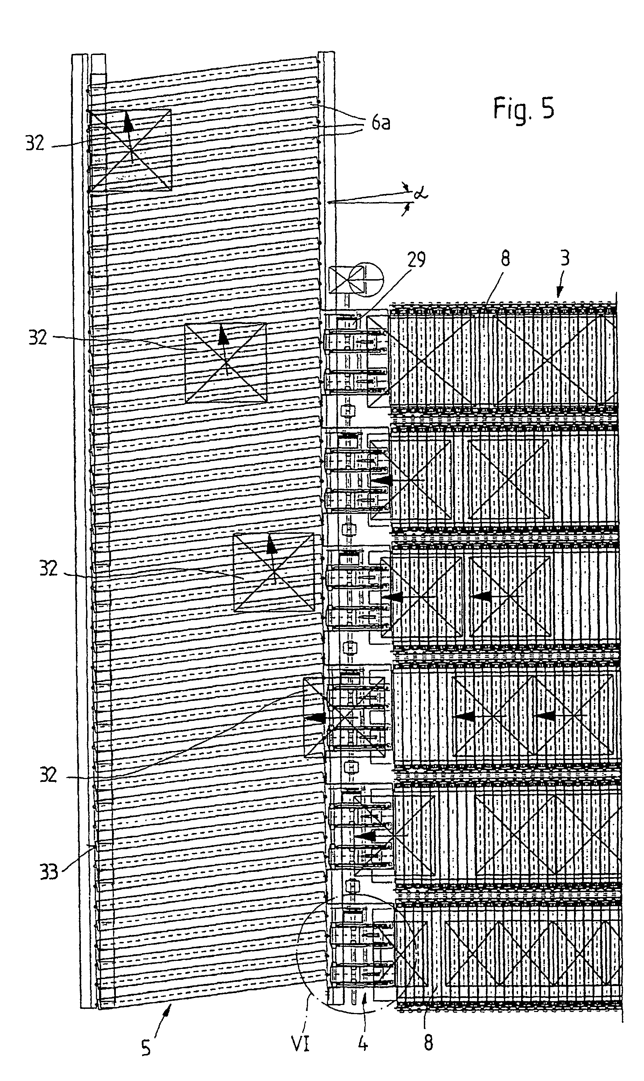

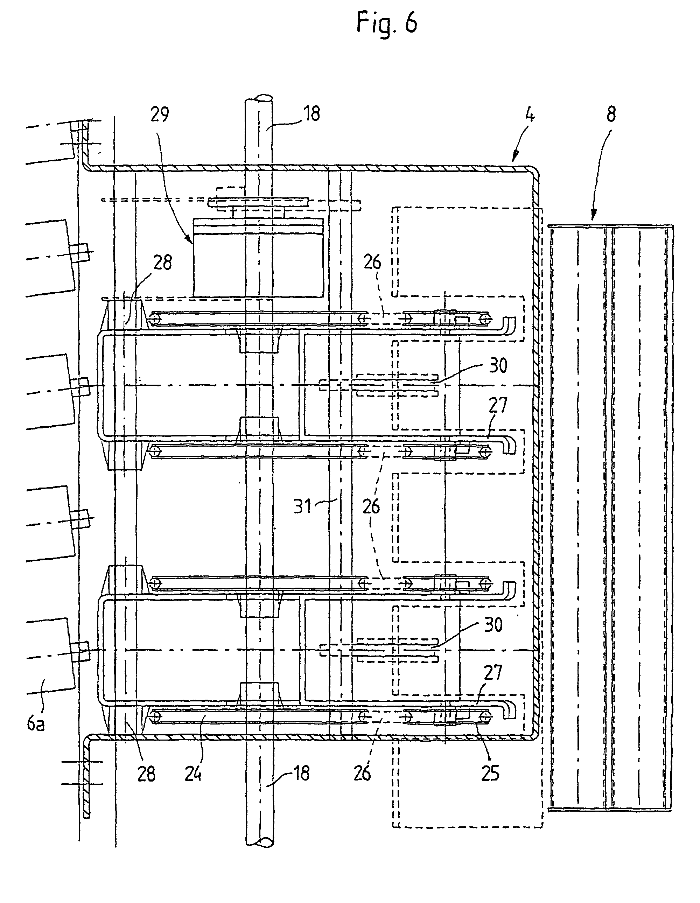

Der sich aus den Fign. 4a bis 4c ergebende Hubmechanismus wird unter Verwendung einer in den Fign. 5 und 6 eingezeichneten Magnetkupplung 29 erreicht. Jede der Entnahmevorrichtungen 4 verfügt über eine eigene Magnetkupplung 29, die zudem getrennt von den übrigen Magnetkupplungen ansteuerbar ist. Die Magnetkupplung 29 umschließt ringförmig die Antriebswelle 18 und stützt sich über einen Gelenkhebel 30 von unten gegen das Gehäuse 27 des Horizontalförderers 15. Auf diese Weise läßt sich das Antriebsmoment der Antriebswelle 18 über die Magnetkupplung 29 in eine Verschwenkbewegung des Gelenkhebels 30 überführen, so daß das Gehäuse 27 um seine Drehachse 28 nach oben verschwenkt wird. Die Kraft zum Anheben des Horizontalförderers einschließlich der sich darauf abstützenden Ware 20 wird also ausschließlich aus der vorhandenen Drehbewegung der Antriebswelle 18 abgeleitet. Die für jeden einzelnen Steuerungsvorgang benötigte zusätzliche Energie beschränkt sich daher auf die relativ geringe Energie der elektrischen Magnetkupplung 29.

Gemäß Fig. 6 kann als Übertragungsglied zwischen der Magnetkupplung 29 und dem sich von unten gegen den Horizontalförderer 15 legenden Gelenkhebel 30 ein Übertragungsgestänge 31 verwendet werden, welches sich parallel zu der Antriebswelle 18 erstreckt. Auf diese Weise ist es möglich, zugleich mehrere Gelenkhebel 30 einzusetzen, wodurch sich das Gehäuse 27 verkantungsfrei anheben läßt. Dies ist insbesondere deshalb von Vorteil, weil bei dem Ausführungsbeispiel jeder Horizontalförderer 15 zur Erzielung einer breiten Aufstandsfläche über insgesamt vier Riemen 26 verfügt.

Fig. 5 läßt erkennen, daß die Längsachsen der Transportwalzen 6a der Transportbahn 5 unter einem Winkel α schräg zur Transportrichtung der Rollenbahnen 8 angeordnet sind. Auf diese Weise ergibt sich beim Transport der Waren entlang der Transportbahn 5 nicht nur eine Förderkomponente in Richtung der Transportbahn selbst, sondern eine zweite Förderkomponente weg von den Lagergassen. Anhand einer Ware bzw. eines Stückgutes 32 ist in Fig. 5 sequentiell dargestellt, wie dieses in Folge der Anordnung der Transportwalzen 6a sehr schnell an den Außenrand 33 der Transportbahn 5 gelangt. Auf diese Weise wird vermieden, daß entnommene und entlang der Transportbahn 5 transportierte Stückgüter aus den darauffolgenden Lagergassen austretende Stückgüter behindern. Dies erhöht die Freiheit bei der Kommissionierung, da bei der Ansteuerung der einzelnen Entnahmevorrichtungen 4 nicht berücksichtigt werden muß, ob sich davor gerade andere Stückgüter befinden. Zu einem reibungsfreien Abtransport der Stückgüter trägt ferner bei, wenn die wirksame Breite der Transportwalzen 6a mindestens das doppelte der Breite der Rollen bzw. Walzen der Rollenbahn 8 beträgt.

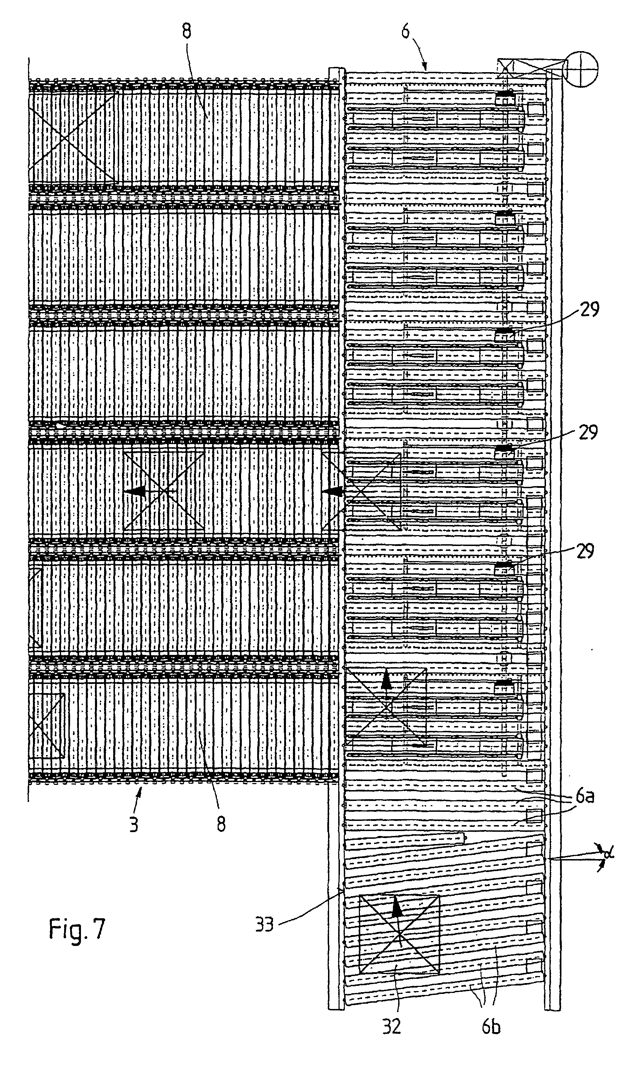

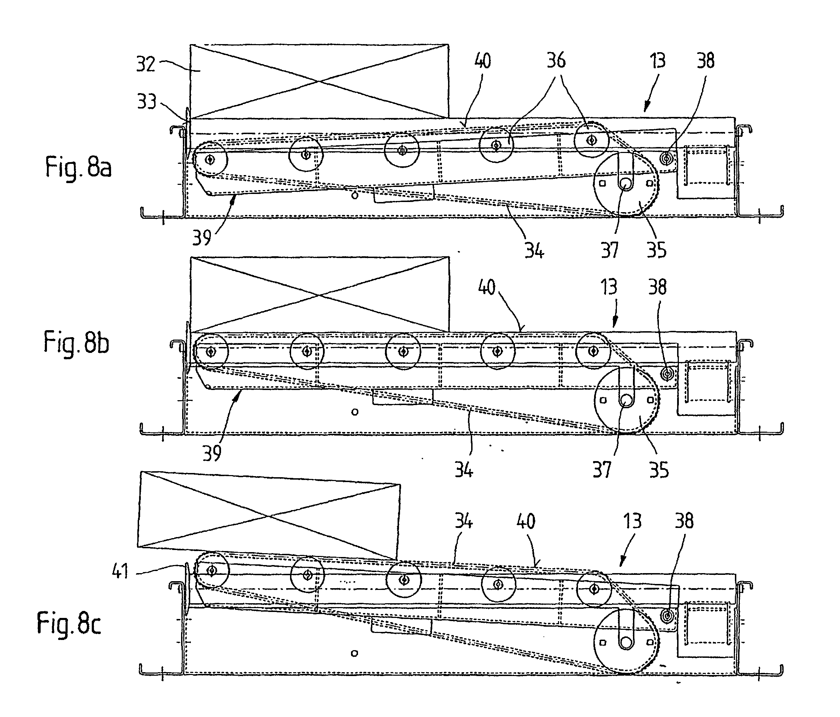

Anhand der Fign. 7 und 8a bis 8c wird nachfolgend erläutert, daß auch im Bestükkungsbereich des Kommissionierlagers Fördereinrichtungen eingesetzt werden, die den Fördereinrichtungen im Kommissionierbereich sehr ähnlich sind. Gemäß Fig. 7 gelangen ankommende Stückgüter 32 durch Schrägstellung der Transportwalzen 6b unter dem Winkel α an jenen Rand 33 der Transportbahn 6, der unmittelbar an den Lagergassen vorbeiführt. Hierdurch wird erreicht, daß sich ankommende Stückgüter 32 stets an diesem Rand der Transportbahn befinden, bevor die Stückgüter die einzelnen Lagergassen erreichen. Vor den Lagergassen sind die Transportwalzen 6a jedoch, anders als die Transportwalzen 6b, gerade ausgerichtet, d. h. in Fluchtung der Lagergassen.

Die Querförderer 13 befinden sich zwischen aufeinanderfolgenden Transportwalzen 6a. Hierzu weisen die angetriebenen Transportwalzen 6a in Transportrichtung einen hinreichend Abstand zueinander auf. Der Querförderer 13 arbeitet, ebenso wie dies voranstehend für den Kommissionierbereich des Kommissionierlagers erläutert wurde, unter Verwendung endloser Riemen 34, die über Riemenscheiben 35, 36 geführt sind. Die Riemenscheiben 35 sind angetrieben, und zwar über eine für sämtliche Querförderer 13 gemeinsame Antriebswelle 37. Auch der Querförderer 13 befindet sind in einem um eine Drehachse 38 verschwenkbaren Gehäuse 39. Die Drehachse 38 befindet sich an dem den Lagergassen abgewandten Ende des Querförderers.

Anhand der Fign. 8a, 8b und 8c läßt sich die Funktion des Querförderers 13 verstehen. In Fig. 8a ist dieser in seiner passiven Lage. Die Stückgüter 32 rollen entlang der Transportwalzen 6a, ohne daß eine Querförderung erfolgt. Mit Betätigung des Querförderers hebt dieser gemäß Fig. 8b an, wobei sich das Gehäuse 39 um die Drehachse 38 verschwenkt. Die geometrischen Verhältnisse sind dergestalt, daß die wirksame Förderfläche von Riemen 34 und Transportwalzen 6a dann auf gleicher Höhe liegen, wenn sich die wirksame Förderfläche des Riemens 34 und die Oberseite der Transportwalzen 6a exakt parallel zueinander erstrecken. Dieser Fall ist in Fig. 8b darstellt. Anschließend führt, wie Fig. 8c erkennen läßt, das Verschwenken des Gehäuses 39 dazu, daß sich die wirksame Förderfläche 40 des Riemens 34 schräg über die Oberseite der Transportwalzen 6a erstreckt, so daß das jeweilige Stückgut 32 auch über etwaige Hindernisse hinweg in die jeweilige Lagergasse hineintransportiert wird. Ein solches Hindernis kann der Spurkranz 41 der Transportwalzen 6a sein.

Der Hubmechanismus zum Verschwenken des Gehäuses 39 um die Drehachse 38 funktioniert ebenso, wie voranstehend unter Bezugnahme auf die Fign. 3a bis 3d und 4a bis 4c für die Entnahmevorrichtungen erläutert: Der Antrieb sämtlicher Querförderer 13 erfolgt über die gemeinsame Antriebswelle 37, ferner verfügt jeder Querförderer 13 über eine eigene Magnetkupplung 29 zum Ableiten der Bewegung der Antriebswelle 37 auf das Verschwenken und damit teilweise Anheben des Gehäuses 39 des Querförderers. Wiederum ist auch jede Magnetkupplung 29 getrennt von den übrigen Magnetkupplungen ansteuerbar, um so systemintern jene Lagergasse 7 auswählen zu können, in die die über die Transportbahn 6 heranrollenden Stückgüter einsortiert werden sollen.

### Bezugszeichenliste

- 1: Lagerbereich
- 2: Bestückungsbereich
- 3: Kommissionierbereich
- 4: Entnahmevorrichtung
- 5: Transportbahn
- 6: Transportbahn
- 6a: Transportwalzen
- 7: Lagergasse
- 8: Rollenbahn
- 9: Begrenzungen
- 10: Modul
- 11: Querförderer
- 11a: Pfeil
- 12: Förderrichtung
- 13: Querförderer α
- 14: pollerförmige Rolle
- 15: Horizontalförderer
- 16: hinteres Ende des Horizontalförderers
- 17: vorderes Ende des Horizontalförderers
- 18: Achse, Antriebswelle
- 19: passive Stellung
- 19': aktive Stellung
- 20: vorderste Ware
- 21: zweitvorderste Ware
- 22: Anschlag
- 23: Begrenzungsanschlag
- 24: Riemenscheibe
- 25: Riemenscheibe
- 26: Riemen
- 27: Gehäuse
- 28: Drehachse
- 29: Magnetkupplung
- 30: Gelenkhebel
- 31: Übertragungsgestänge
- 32: Stückgut
- 33: Außenrand
- 34: Riemen
- 35: Riemenscheibe
- 36: Riemenscheibe
- 37: Antriebswelle
- 38: Drehachse
- 39: Gehäuse
- 40: Förderfläche
- 41: Spurkranz

- α: Anstellwinkel der Rollen

## Patentansprüche

1. Kommissionierlager für Stückgüter, bestehend aus
- einem Lagerbereich (1) mit einer Vielzahl sich darin parallel zueinander erstreckender, aus Rollenbahnen (8) bestehender Lagergassen (7) für Waren jeweils gleicher Art,
- einem Bestückungsbereich (2) am einen Ende der Lagergassen (7) mit Mitteln zur Einlagerung neuer Waren in die zugehörigen Lagergassen (7) und
- einem Kommissionierbereich (3) am anderen Ende der Lagergassen (7) mit für jede Lagergasse (7) getrennten Entnahmevorrichtungen (4) zur rechnergesteuerten Überführung einzelner Waren aus den Lagergassen (7) auf nachgeordnete Fördereinrichtungen, wobei jede Entnahmevorrichtung (4) mit einem Horizontalförderer (15) für die abzutransportierenden Waren (20) versehen ist
**dadurch gekennzeichnet,**
**daß** Bestandteil jeder Entnahmevorrichtung (4) außer dem Horizontalförderer (15) ein der Lagergasse (7) zugewandter, beweglicher Anschlag (22) zum Zurückhalten der nachfolgenden Waren (21) ist,
**daß** der Horizontalförderer (15) angetrieben ist, und
**daß** sowohl die Antriebsbewegung des Horizontalförderers (15) als auch die Bewegung des Anschlags (22) von der Drehbewegung einer gemeinsamen Antriebswelle (18) abgeleitet wird.

2. Kommissionierlager nach Anspruch 1, **dadurch gekennzeichnet, daß** sich entlang den Entnahmevorrichtungen (4) und quer zu den Lagergassen (7) eine kontinuierlich angetriebene Transportbahn (5) für die entnommenen Waren erstreckt.

3. Kommissionierlager nach Anspruch 1, **dadurch gekennzeichnet, daß** die Rollen oder Walzen der Rollenbahnen (8) einzeln oder gruppenweise abbremsbar sind.

4. Kommissionierlager nach einem der vorangehenden Ansprüche, **gekennzeichnet durch** einen jeder Entnahmevorrichtung (4) eigenen Hubmechanismus zum zumindest teilweisen Anheben des Horizontalförderers (15).

5. Kommissionierlager nach Anspruch 4, **dadurch gekennzeichnet, daß** der Horizontalförderer (15) mittels des Hubmechanismus bis in eine Höhe anhebbar ist, in der sich die wirksame Förderfläche des Horizontalförderers (15) oberhalb der Aufstandsfläche der Waren auf der Rollenbahn (8) befindet.

6. Kommissionierlager nach einem der Ansprüche 1 bis 5, **dadurch gekennzeichnet, daß** der Antrieb einer Mehrzahl der Entnahmevorrichtungen (4) über die gemeinsame Antriebswelle (18) erfolgt, die sich quer zu den Lagergassen (7) erstreckt.

7. Kommissionierlager nach einem der Ansprüche 4 bis 6, **dadurch gekennzeichnet, daß** jede Lagergasse (7) an ihrem dem Kommissionierbereich (3) zugewandten Ende mit einem über die Aufstandsfläche für die Waren hinausragenden Begrenzungsanschlag (23) versehen ist, an dem die jeweils vorderste Ware (20) anliegt, und daß der Horizontalförderer (15) der Entnahmevorrichtung (4) mittels des Hubmechanismus bis in eine Höhe anhebbar ist, in der sich die wirksame Förderfläche des Horizontalförderers (15) oberhalb des Begrenzungsanschlags (23) befindet.

8. Kommissionierlager nach Anspruch 7, **dadurch gekennzeichnet, daß** der Anschlag (22) zusammen mit dem Horizontalförderer (15) anhebbar gestaltet ist.

9. Kommissionierlager nach einem der Ansprüche 4 bis 8, **dadurch gekennzeichnet, daß** zum teilweisen Anheben des Horizontalförderers (15) dessen hinteres, in die Lagergasse (7) reichendes Ende (16) um eine Drehachse (28) verschwenkbar ist.

10. Kommissionierlager nach einem der Ansprüche 4 bis 9, **gekennzeichnet durch** eine Magnetkupplung (29) zum Ableiten der Bewegung beim zumindest teilweisen Anheben des Horizontalförderers (15) aus der Drehbewegung der gemeinsamen Antriebswelle (18), wobei die Magnetkupplung (29) jeder Entnahmevorrichtung (4) getrennt von den übrigen Magnetkupplungen (29) ansteuerbar ist.

11. Kommissionierlager nach Anspruch 10, **dadurch gekennzeichnet, daß** die Magnetkupplung (29) die Antriebswelle (18) ringförmig umschließt und sich über einen Gelenkhebel (30) von unten gegen das Gehäuse (27) des Horizontalförderers (15) abstützt.

12. Kommissionierlager nach einem der Ansprüche 1 bis 11, **dadurch gekennzeichnet, daß** sich der Horizontalförderer (15) aus einer ersten, drehfest mit der Antriebswelle (18) verbundenen Riemenscheibe (24), mindestens einer weiteren, mitlaufenden Riemenscheibe (25) sowie einem über die Riemenscheiben (24, 25) geführten, endlosen Riemen (26) zusammensetzt, wobei die angetriebene Riemenscheibe (24) das vordere Ende (17) und die mitlaufende Riemenscheibe (25) das hintere Ende (16) des Horizontalförderers (15) definiert.

13. Kommissionierlager nach einem der vorangehenden Ansprüche, **gekennzeichnet durch** ein in dem Bestückungsbereich (2) quer zu den Lagergassen (7) sich erstreckende, kontinuierlich angetriebene und sich aus einzelnen Transportwalzen (6a) zusammensetzende Transportbahn (6) für neu einzulagernde Waren.

14. Kommissionierlager nach Anspruch 13, **gekennzeichnet durch** zwischen den Transportwalzen (6a) angeordnete, für jede Lagergasse (7) getrennt betätigbare Querförderer (13) mit Förderrichtung (12) in Richtung zu der jeweiligen Lagergasse (7).

15. Kommissionierlager nach Anspruch 14, **dadurch gekennzeichnet, daß** jeder Querförderer (13) mit einem eigenen Hubmechanismus zum zumindest teilweisen Anheben des Querförderers versehen ist, wobei sich die wirksame Förderfläche (40) des Querförderers bei unbetätigtem Hubmechanismus unterhalb und bei betätigtem Hubmechanismus zumindest teilweise oberhalb der Oberseite der Transportwalzen (6a) befindet.

16. Kommissionieriager nach Anspruch 15, **dadurch gekennzeichnet, daß** sich der Querförderer (13) aus mehreren Riemenscheiben (35, 36) zusammensetzt, über die ein endloser Riemen (34) geführt ist, dessen Oberseite die wirksame Förderfläche (40) des Querförderers (13) bildet.

17. Kommissionierlager nach Anspruch 15 oder Anspruch 16, **dadurch gekennzeichnet, daß** der Antrieb einer Mehrzahl der Querförderer (13) über eine gemeinsame Antriebswelle (37) erfolgt, und daß jeder Querförderer (13) über eine eigene Magnetkupplung (29) zum Ableiten der Bewegung beim zumindest teilweisen Anheben des Querförderers aus der Drehbewegung der gemeinsamen Antriebswelle (37) verfügt, wobei die Magnetkupplung (29) jedes Querförderers (13) getrennt von den übrigen Magnetkupplung (29) ansteuerbar ist.

18. Kommissionierlager nach Anspruch 2, **dadurch gekennzeichnet, daß** sich die Transportbahn (5) aus Transportwalzen zusammensetzt, deren wirksame Breite mindestens das doppelte der Breite der Rollen bzw. Walzen der Rollenbahn 8 beträgt, und daß die Längsachsen der Transportwalzen unter einem Winkel (α) schräg zur Richtung der Lagergassen (7) mit Förderkomponente weg von den Lagergassen (7) angeordnet sind.

## Claims

1. Order-picking store for piece goods, comprising
- a storage region (1) with a multiplicity of storage aisles (7) which extend parallel to one another in said storage region, comprise roller conveyors (8) and are intended for articles of the same type in each case,
- a loading region (2) at one end of the storage aisles (7), with means for introducing new articles into the associated storage aisles (7), and
- an order-picking region (3) at the other end of the storage aisles (7), with separate removal apparatuses (4) for each storage aisle (7) which are intended for transferring individual articles, in a computer-controlled manner, from the storage aisles (7) onto downstream conveying arrangements, each removal apparatus (4) being provided with a horizontal conveyor (15) for the articles (20) which are to be transported away,
**characterized in that** a constituent part of each removal apparatus (4), in addition to the horizontal conveyor (15), is a movable stop (22) which is directed towards the storage aisle (7) and is intended for holding back the following articles (21), **in that** the horizontal conveyor (15) is driven, and **in that** both the drive movement of the horizontal conveyor (15) and the movement of the stop (22) are derived from the rotary movement of a common drive shaft (18).

2. Order-picking store according to Claim 1, **characterized in that** a continuous driven transporting path (5) for the removed articles extends along the removal apparatuses (4) and transversely to the storage aisles (7).

3. Order-picking store according to Claim 1, **characterized in that** the rollers of the roller conveyors (8) can be braked individually or in groups.

4. Order-picking store according to one of the preceding claims, **characterized by** a dedicated lifting mechanism for each removal apparatus (4), for at least partially raising the horizontal conveyor (15).

5. Order-picking store according to Claim 4, **characterized in that** the horizontal conveyor (15) can be raised, by means of the lifting mechanism, to a level at which the active conveying surface of the horizontal conveyor (15) is located above the surface on which the articles stand on the roller conveyor (8).

6. Order-picking store according to one of Claims 1 to 5, **characterized in that** a plurality of the removal apparatuses (4) are driven via the common drive shaft (18), which extends transversely to the storage aisles (7).

7. Order-picking store according to one of Claims 4 to 6, **characterized in that**, at its end which is directed towards the order-picking region (3), each storage aisle (7) is provided with a boundary stop (23) which projects beyond the surface on which the articles stand and against which the respectively foremost article (20) butts, and **in that** the horizontal conveyor (15) of the removal apparatus (4) can be raised, by means of the lifting mechanism, to a level at which the active conveying surface of the horizontal conveyor (15) is located above the boundary stop (23).

8. Order-picking store according to Claim 7, **characterized in that** the stop (22) is configured such that it can be raised together with the horizontal conveyor (15).

9. Order-picking store according to one of Claims 4 to 8, **characterized in that**, for the partial raising of the horizontal conveyor (15), the rear end (16) of the latter, which extends into the storage aisle (7), can be pivoted about an axis of rotation (28).

10. Order-picking store according to one of Claims 4 to 9, **characterized by** a magnetic coupling (29) for deriving the movement, during at least partial raising of the horizontal conveyor (15), from the rotary movement of the common drive shaft (18), it being possible for the magnetic coupling (29) of each removal apparatus (4) to be activated separately from the rest of the magnetic couplings (29).

11. Order-picking store according to Claim 10, **characterized in that** the magnetic coupling (29) encloses the drive shaft (18) in an annular manner and is supported against the housing (27) of the horizontal conveyor (15) from beneath via an articulated lever (30).

12. Order-picking store according to one of Claims 1 to 11, **characterized in that** the horizontal conveyor (15) is made up of a first belt pulley (24), which is connected in a rotationally fixed manner to the drive shaft (18), at least one further, co-running belt pulley (25) and an endless belt (26), which is guided over the belt pulleys (24, 25), the driven belt pulley (24) defining the front end (17), and the co-running belt (25) defining the rear end (16), of the horizontal conveyor (15).

13. Order-picking store according to one of the preceding claims, **characterized by** a continuously driven transporting path (6) which extends in the loading region (2), transversely to the storage aisles (7), is made up of individual transporting rollers (6a) and is intended for new articles which are to be introduced.

14. Order-picking store according to Claim 13, **characterized by** transverse conveyors (13) which are arranged between the transporting rollers (6a), can be actuated separately for each storage aisle (7) and have the conveying direction (12) running in the direction of the respective storage aisle (7).

15. Order-picking store according to Claim 14, **characterized in that** each transverse conveyor (13) is provided with a dedicated lifting mechanism for at least partially raising the transverse conveyor, the active conveying surface (40) of the transverse conveyor being located beneath the top side of the transporting rollers (6a) when the lifting mechanism is not actuated and being located at least partially above the top side of the transporting rollers (6a) when the lifting mechanism is actuated.

16. Order-picking store according to Claim 15, **characterized in that** the transverse conveyor (13) is made up of a plurality of belt pulleys (35, 36) over which an endless belt (34) is guided, the top side of the latter forming the active conveying surface (40) of the transverse conveyor (13).

17. Order-picking store according to Claim 15 or Claim 16, **characterized in that** a plurality of the transverse conveyors (13) are driven via a common drive shaft (37), and **in that** each transverse conveyor (13) has a dedicated magnetic coupling (29) for deriving the movement, during at least partial raising of the transverse conveyor, from the rotary movement of the common drive shaft (37), it being possible for the magnetic coupling (29) of each transverse conveyor (13) to be activated separately from the rest of the magnetic couplings (29).

18. Order-picking store according to Claim 2, **characterized in that** the transporting path (5) is made up of transporting rollers, of which the effective width is at least double the width of the rollers of the roller conveyor (8), and **in that** the longitudinal axes of the transporting rollers are arranged at an oblique angle (α) to the direction of the storage aisles (7), with a conveying component in the direction away from the storage aisles (7).

## Revendications

1. Magasin de préparation de commandes constitué :
- d'une zone d'entreposage (1) comportant une pluralité de pistes d'entreposage (7) qui s'y étendent parallèlement entre elles, qui sont composées de transporteurs à galets (8) et qui sont chacune destinées à des marchandises d'un même type,
- d'une zone d'alimentation (2) située à l'une des extrémités des pistes d'entreposage (7) et comportant des moyens d'emmagasinage de nouvelles marchandises dans les pistes d'entreposage associées (7) et
- d'une zone de préparation de commandes (3) située à l'autre extrémité des pistes d'entreposage (7) et comportant, pour chacune des pistes d'entreposage (7), des dispositifs d'enlèvement séparés (4) servant au transfert commandé par ordinateur de marchandises individuelles des pistes d'entreposage (7) aux dispositifs de transport disposés en aval, chaque dispositif d'enlèvement (4) étant équipé d'un convoyeur horizontal (15) destiné aux marchandises (20) à évacuer,
**caractérisé en ce que**,
outre le convoyeur horizontal (15), un butoir mobile (22) tourné vers la piste d'entreposage (7) et servant à retenir les marchandises suivantes (21) est une partie constitutive de chacun des dispositifs d'enlèvement (4),
**en ce que** le convoyeur horizontal (15) est entraîné, et **en ce que** non seulement le mouvement d'entraînement du convoyeur horizontal (15) mais aussi le mouvement du butoir (22) sont dérivés du mouvement rotatif d'un arbre de transmission commun (18).

2. Magasin de préparation de commandes selon la revendication 1, **caractérisé en ce qu'**une voie de transport (5) continuellement entraînée et destinée aux marchandises enlevées s'étend le long des dispositifs d'enlèvement (4) et transversalement aux pistes d'entreposage (7).

3. Magasin de préparation de commandes selon la revendication 1, **caractérisé en ce que** les galets ou les cylindres des transporteurs à galets (8) peuvent être freinés individuellement ou par groupes.

4. Magasin de préparation de commandes selon l'une des revendications précédentes, **caractérisé par** un mécanisme de levage propre à chacun des dispositifs d'enlèvement (4) et servant à lever, au moins partiellement, le convoyeur horizontal (15).

5. Magasin de préparation de commandes selon la revendication 4, **caractérisé en ce que** le convoyeur horizontal (15) peut être soulevé par le mécanisme de levage jusqu'à une hauteur à laquelle la surface de transport efficace du convoyeur horizontal (15) se trouve au-dessus de la surface de contact des colis de détail placés sur le transporteur à galets (8).

6. Magasin de préparation de commandes selon l'une des revendications 1 à 5, **caractérisé en ce que** l'entraînement d'une pluralité des dispositifs d'enlèvement (4) a lieu au moyen d'un arbre de transmission commun (18) qui s'étend transversalement aux pistes d'entreposage (7).

7. Magasin de préparation de commandes selon l'une des revendications 4 à 6, **caractérisé en ce que** chacune des pistes d'entreposage (7) est munie, à son extrémité tournée vers la zone de préparation de commandes (3), d'une butée de limitation (23) faisant saillie au-dessus de la surface de contact des marchandises et contre laquelle la marchandise de tête (20) du moment prend appui, et **en ce que** le convoyeur horizontal (15) du dispositif d'enlèvement (4) peut être soulevé au moyen du mécanisme de levage jusqu'à une hauteur à laquelle la surface de transport efficace du convoyeur horizontal (15) se trouve au-dessus de la butée de limitation (23).

8. Magasin de préparation de commandes selon la revendication 7, **caractérisé en ce que** le butoir (22) est configuré de manière à pouvoir être soulevé conjointement avec le convoyeur horizontal (15).

9. Magasin de préparation de commandes selon l'une des revendications 4 à 8, **caractérisé en ce que**, pour soulever partiellement le convoyeur horizontal (15), son extrémité arrière (16) qui va jusque dans la piste d'entreposage (7) peut basculer autour d'un axe de rotation (28).

10. Magasin de préparation de commandes selon l'une des revendications 4 à 9, **caractérisé par** un accouplement à aimant (29) servant, lors du soulèvement au moins partiel du convoyeur horizontal (15), à tirer le mouvement du mouvement rotatif de l'arbre de transmission commun (18), l'accouplement à aimant (29) de chacun des dispositifs d'enlèvement (4) pouvant être commandé indépendamment de tous les autres accouplements à aimant (29).

11. Magasin de préparation de commandes selon la revendication 10, **caractérisé en ce que** l'accouplement à aimant (29) entoure l'arbre de transmission (18) en formant un anneau et **en ce qu'**il prend appui par le dessous, par l'intermédiaire d'un levier articulé (30), contre le boîtier (27) du convoyeur horizontal (15).

12. Magasin de préparation de commandes selon l'une des revendications 1 à 11, **caractérisé en ce que** le convoyeur horizontal (15) se compose d'une première poulie (24) reliée solidairement à l'arbre de transmission (18), d'au moins une autre poulie rotative (25) ainsi que d'une courroie sans fin (26) passant sur les poulies (24, 25), la poulie entraînée (24) déterminant l'extrémité avant (17) et la poulie rotative (25) déterminant l'extrémité arrière (16) du convoyeur horizontal (15).

13. Magasin de préparation de commandes selon l'une des revendications précédentes, **caractérisé par** un dispositif de transport (6) entraîné de façon continue qui s'étend transversalement aux pistes d'entreposage (7) dans la zone d'alimentation (2) et qui est composé de cylindres de transport individuels (6a), lequel est destiné aux marchandises à nouvellement entreposer.

14. Magasin de préparation de commandes selon la revendication 13, **caractérisé par** des convoyeurs transversaux (13) qui sont disposés entre les cylindres de transport (6a), qui peuvent être actionnés séparément pour chacune des pistes d'entreposage (7) et dont le sens de transport (12) est orienté vers leur piste d'entreposage respective (7).

15. Magasin de préparation de commandes selon la revendication 14, **caractérisé en ce que** chaque convoyeur transversal (13) est pourvu d'un mécanisme de levage propre servant au levage au moins partiel du convoyeur transversal, la surface de transport efficace (40) du convoyeur transversal étant placée au-dessous de la face supérieure des cylindres de transport lorsque le mécanisme de levage n'est pas actionné et au moins partiellement au-dessus de la face supérieure des cylindres de transport (6a) lorsque le mécanisme de levage est actionné.

16. Magasin de préparation de commandes selon la revendication 15, **caractérisé en ce que** le convoyeur transversal (13) se compose de plusieurs poulies (35, 36) sur lesquelles passe une courroie sans fin (34) dont la face supérieure constitue la surface de transport efficace (40) du convoyeur transversal (13).

17. Magasin de préparation de commandes selon la revendication 15 ou la revendication 16, **caractérisé en ce que** l'entraînement d'une pluralité de convoyeurs transversaux (13) a lieu au moyen d'un arbre de transmission commun (37) et **en ce que** chacun des convoyeurs transversaux (13) dispose de son propre accouplement à aimant (29) servant, lors du levage au moins partiel du convoyeur transversal, à prélever le mouvement sur le mouvement rotatif de l'arbre de transmission commun (37), l'accouplement à aimant (29) de chaque convoyeur transversal (13) pouvant être commandé séparément du reste des autres accouplements à aimant (29).

18. Magasin de préparation de commandes selon la revendication 2, **caractérisé en ce que** la voie de transport (5) se compose de cylindres de transport ayant une largeur efficace d'au moins le double de la largeur des galets ou des cylindres du transporteur à galets (8) et **en ce que** l'axe longitudinal des cylindres de transport est disposé de manière à former un angle (α) avec la direction des pistes d'entreposage (7) et de façon à créer une composante de transport s'éloignant des pistes d'entreposage (7).
